Europäisches Patentamt

European Patent Office

Office européen des brevets

(19)

(11) **EP 0 580 969 B1**

(12) **EUROPÄISCHE PATENTSCHRIFT**

(45) Veröffentlichungstag und Bekanntmachung des Hinweises auf die Patenterteilung:
**18.09.1996  Patentblatt 1996/38**

(51) Int Cl.6: **G01L 5/16**

(21) Anmeldenummer: **93107430.6**

(22) Anmeldetag: **07.05.1993**

(54) **Messradsatz für Schienenfahrzeuge**

Load-measuring wheelset for railway vehicles

Ensemble de roue de mesure pour véhicules sur rails

(84) Benannte Vertragsstaaten:
**AT BE CH DE DK ES FR GB GR IE IT LI LU MC NL PT SE**

(30) Priorität: **10.06.1992  DE 4218929**

(43) Veröffentlichungstag der Anmeldung:
**02.02.1994  Patentblatt 1994/05**

(73) Patentinhaber: **Deutsche Bahn Aktiengesellschaft**
**D-10365 Berlin (DE)**

(72) Erfinder:
• **Berg, Hermann**
**W-4901 Hiddenhausen (DE)**
• **Zück, Heinz Herbert**
**W-4950 Minden (Westf) (DE)**
• **Caspari, Hans-Dieter**
**W-4950 Minden (Westf) (DE)**
• **von Piwenitzky, Günter**
**W-4953 Petershagen (DE)**
• **Rethmeier, Dieter**
**W-3062 Bückeburg (DE)**
• **Röckemann, Hilbert**
**W-4950 Minden (Westf) (DE)**

(56) Entgegenhaltungen:
EP-A- 0 059 295         EP-A- 0 421 065
CH-A- 424 310          DD-A- 281 727
DE-A- 3 941 364

• PATENT ABSTRACTS OF JAPAN : vol. 10, no. 369 (P-525)(2426) 10 Dezember 1986 & JP-A-61 162 728 (OMRON TATEISI ELECTRONICS CO.) 23. July 1986.

**Beschreibung**

Die Erfindung betrifft einen Meßradsatz für Schienenfahrzeuge mit auf den Radscheiben im Abstand verschiedener Radien angeordneten Meßfühlern, insbesondere Dehnungsmeßstreifen, zur Erfassung von während der Fahrt auftretenden Kräften.

Aus kommerziellen Gründen nehmen Geschwindigkeiten und Achslasten im Schienenverkehr zu. Dabei ist es aus verschiedenen Gründen unbedingt notwendig, die daraus entstehenden Auswirkungen sowohl auf das Fahrzeug als auch auf den Oberbau zu kennen. Von maßgeblicher Bedeutung sind die zwischen Rad und Schiene auftretenden Kräfte.

Zur kontinuierlichen Bestimmung der Radaufstandskräfte, der Führungskräfte und der Tangentialkräfte wurde das sogenannte Radsatzwellenverfahren entwickelt (Glasers Annalen Nr. 12/1972, Seiten 373-385). Bei diesem Verfahren werden an vier Meßquerschnitten mittels je acht Meßfühlern (Dehnungsmeßstreifen) die Biegedehnungen und Biegespannungen einer Radsatzwelle gemessen. Da diese Biegedehnungen und Biegespannungen zu den auftretenden Kräften in Beziehung stehen, können aufgrund der Meßwerte auch die Kräfte bestimmt werden. Nachteilig ist bei diesem Verfahren, daß infolge des sich ändernden Radaufstandspunktes die gemessene Führungskraft mit einem relativ großen Meßfehler behaftet ist.

Zur Ermittlung der vertikalen Kräfte zwischen Rad und Schiene im Radaufstandspunkt wurde ein Meßrad entwickelt (DE-PS 26 47 505). Bei diesem Meßrad sind im Radkranz in Umfangsrichtung nebeneinander mehrere quer zur Radebene sich erstreckende Ausnehmungen vorgesehen. In diesen Ausnehmungen sind die Meßfühler verteilt über die Breite des Radkranzes angeordnet. Nicht möglich ist es, mit diesem Meßrad die horizontalen Kräfte zwischen Rad und Schiene zu bestimmen.

Die Messung horizontalen Kräfte zwischen Rad und Schiene unabhängig vom Radaufstandspunkt ist möglich mit einem Meßradsatz nach OS-DE 3114499 A 1 bei dem auf der Welle an drei Meßquerschnitten je acht Meßfühler angordnet sind, wobei vier Meßfühler in Achsrichtung und vier Meßfühler quer zur Achsrichtung liegen. Nachteilig ist hierbei jedoch, daß Temperatureinflüsse die Meßergebnisse stark beeinflussen können.

Aufgabe der Erfindung ist es, die horizontalen Kräfte zwischen Rad und Schiene unabhängig vom Radaufstandspunkt hinreichend genau bestimmen zu können.

Diese Aufgabe wird erfindungsgemäß mit einem Meßradsatz der eingangs beschriebenen Art dadurch gelöst, daß je Radius acht Meßfühler angeordnet sind, wobei vier Meßfühler auf der Radscheibeninnenseite und vier Meßfühler auf der Radscheibenaußenseite liegen.

Dabei ist es erforderlich, daß mindestens zwei Meßradien pro Radscheibe vorhanden sind.

Zur Meßwertbestimmung sind die acht Meßfühler (R 1 bis R 8) eines Meßradius zu zwei an sich bekannten Wheastoneschen Meßbrücken zusammengeschaltet, wobei zwei Meßfühler auf der Radscheibeninnenseite und zwei Meßfühler auf der Radscheibenaußenseite zusammengehören.

Der Vorteil des erfindungsgemäßen Meßradsatzes besteht darin, daß nun die horizontalen Kräfte zwischen Rad und Schiene ohne Einfluß des Radaufstandspunktes gemessen werden können. Aufgrund der Meßergebnisse sind somit eindeutige Angaben zur Entgleisungssicherheit und zur Gleisbeanspruchung möglich.

Nachfolgend wird die Erfindung anhand eines zeichnerisch schematisch dargestellten Ausführungsbeispiels beschrieben.

Es zeigen:

Fig. 1      einen Meßradsatz,

Fig. 2      die Anordnung der Meßfühler an einem Meßradius einer Radscheibe,

Fig. 3      die Schaltung der Meßfühler als Brückenschaltung

Fig. 4      die Kompensationsschaltung

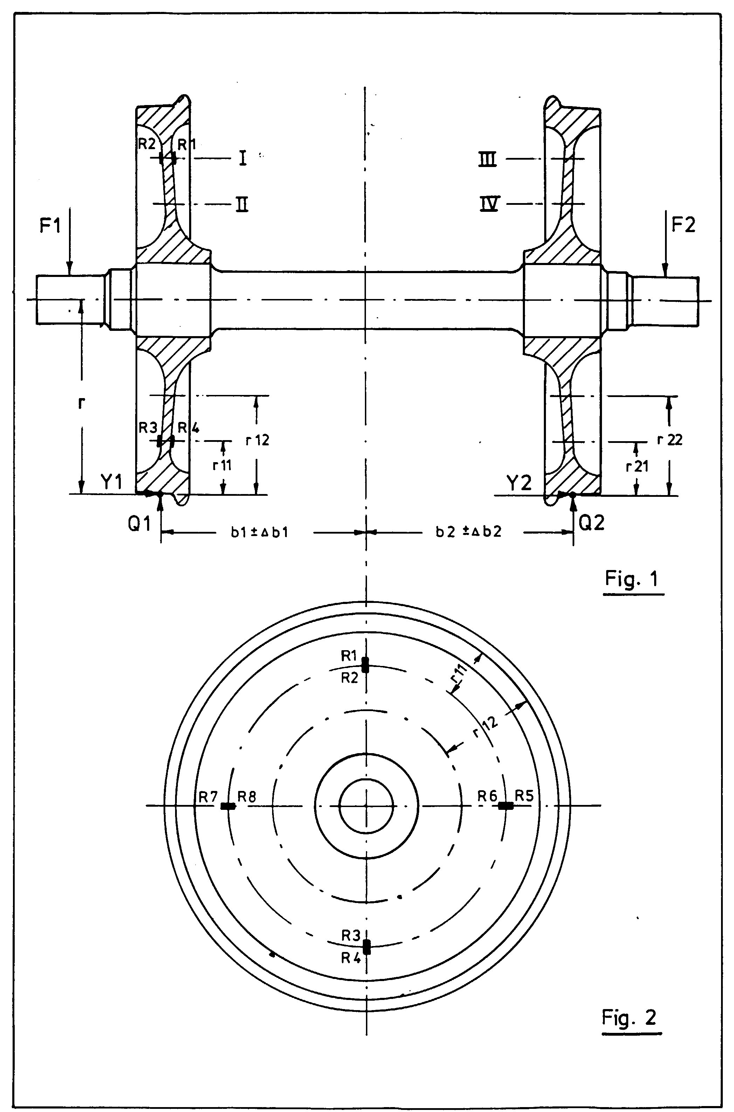

Bei dem in Fig. 1 dargestellten Meßradsatz werden an beiden Meßradien r 11 und r 12 je acht Fühler R 1 bis R 8 angeordnet. Die Anordnung der einzelnen Fühler im Meßradius r 11 zueinander ist aus Fig. 2 ersichtlich. Die Fühler R 1, R 4, R 5 und R 8 liegen auf der Radscheibeninnenseite und die Fühler R 2, R 3, R 6 und R 7 liegen auf der Radscheibenaußenseite. Entsprechend gilt die Meßfühleranordnung für die Meßradien r 12 bzw. r 21 und r 22.

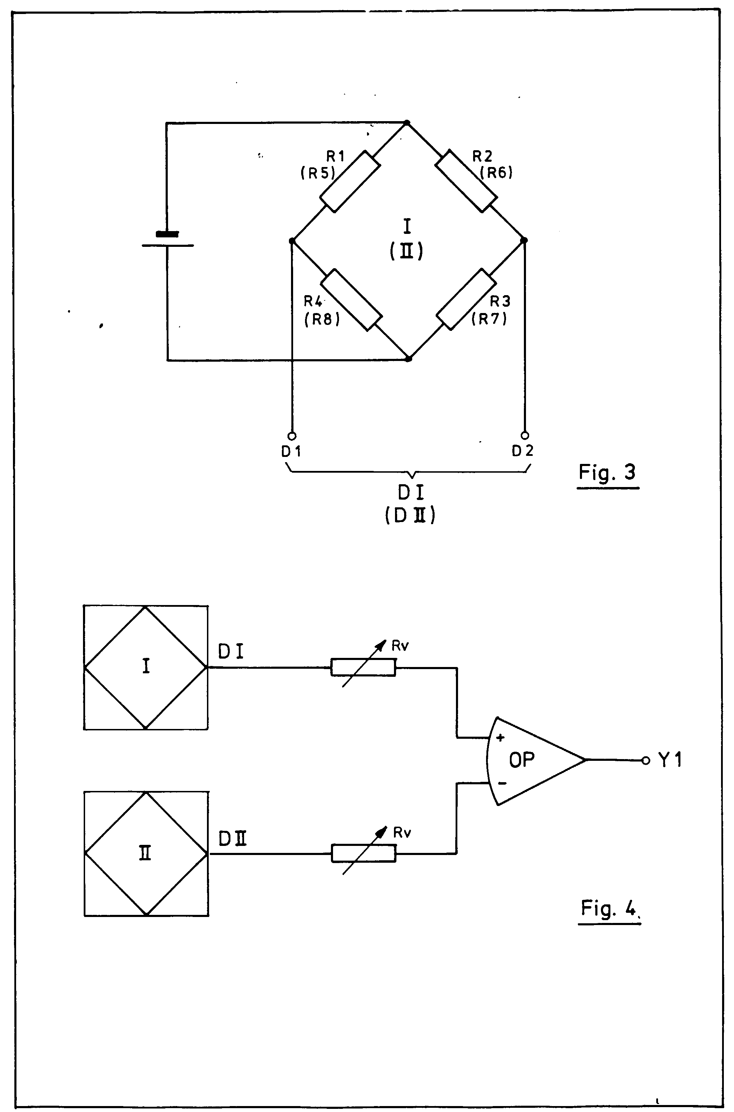

Die Lage der Fühler in Brückenschaltung I zeigt Fig. 3. Entsprechend ist die Lage der Fühler in den drei anderen Brückenschaltungen. Die zwischen den Meßpunkten D 1 und D 2 gemessenen Spannungen DI und DII sind ein Maß für die im betreffenden Meßradius auftretenden Biegespannungen. An den beiden Radaufstandspunkten greifen im Fahrbetrieb die horizontalen Kräfte Y 1 und Y 2 und die vertikalen Kräfte Q 1 und Q 2 an. Die Abstände b 1 und b 2 der Radaufstandspunkte von der Radsatzmitte sind nicht konstant, sondern ändern sich aufgrund des Sinuslaufes im Fahrbetrieb um $\pm \Delta b_1$ bzw. $\pm \Delta b_2$.

Für die aufgrund der Kräfte erzeugten Momente in den vier Meßradien r 11, r 12, r 21 und r 22 gilt:

$$MI = Y\,1\,.\,r\,11 \pm Q\,1\,.\,\Delta\,b\,1$$

$$MII = Y\,1\,.\,r\,12 \pm Q\,1\,.\,\Delta\,b\,1$$

$$MIII = Y\,2\,.\,r\,21 \pm Q\,2\,.\,\Delta\,b\,2$$

$$MIV = Y\,2\,.\,r\,22 \pm Q\,2\,.\,\Delta\,b\,2$$

Aus den vorstehenden Gleichungen sind dann folgende Beziehungen ableitbar:

$$Y1 = \frac{MI - MII}{r\,11 - r\,12}$$

$$Y2 = \frac{MIII - MIV}{r\,21 - r\,22}$$

Diese Beziehungen zeigen, daß die Radaufstandspunkte nicht mit eingehen.

Bei Rotation des Radsatzes beschreiben die Biegemomentenlinien des erfindungsgemäßen Radsatzes wie beim "Radsatzwellenverfahren" eine Sinus- bzw. Cosinusfunktion. Durch die bekannte Winkeltransformation können die Kräfte Y1 und Y2 während der Fahrt kontinuierlich gemessen werden.

Werden mit dem erfindungsgemäßen Meßradsatz gleichzeitig auch Messungen nach dem Radsatzwellenverfahren gemacht, so kann anhand der Differenz $\Delta Y$ der beiden gemessenen horizontalen Kräfte $Y_R$ (Radsatzwellenverfahren) und $Y_E$ (erfindungsgemäßer Meßradsatz) die jeweilige Abweichung $\Delta b$ des Radaufstandspunktes bestimmt werden. Der Einfluß des Radaufstandspunktes auf die horizontalen Kräfte ist beim Radsatzwellenverfahren in Verbindung mit dem Radius r des Rades sowie der Radaufstandskraft Q wie folgt definiert:

$$Y = \frac{\Delta b}{r} \cdot Q = Y_R - Y_E$$

Daraus ergibt sich dann:

$$\Delta b = r \cdot \frac{Y_R - Y_E}{Q}$$

Insbesondere bei der Überprüfung theoretischer Radsatzlaufmodelle durch Messungen und bei der genauen Gleislagebestimmung ist die Kenntnis über die Lage des Radaufstandspunktes von großer Wichtigkeit.

Zur Kompensation von Störeinflüssen während der Messungen werden entsprechend Fig. 4 die beiden Meßbrücken I und II eines Meßradius in einem Operationsverstärker OP zusammengeschaltet.

**Patentansprüche**

1. Meßradsatz für Schienenfahrzeuge mit auf den Radscheiben im Abstand verschiedener Radien angeordneten Meßfühlern, insbesondere Dehnungsmeßstreifen zur Erfassung von im Fahrbetrieb auftretenden Kräften, dadurch gekennzeichnet, daß je Radius acht Meßfühler (R 1 bis R 8) angeordnet sind, wobei vier Meßfühler (R 1, R 4, R 5, R 8) auf der Radscheibeninnenseite und vier Meßfühler (R 2, R 3, R 6, R 7) auf der Radscheibenaußenseite liegen.

2. Meßradsatz nach Anspruch 1, dadurch gekennzeichnet, daß mindestens zwei Meßradien (r 11, r 12) pro Radscheibe vorhanden sind.

3. Meßrad nach Anspruch 1 oder 2, dadurch gekennzeichnet, daß die acht Meßfühler (R 1 bis R 8) eines Meßradius (r 11) zu zwei an sich bekannten Wheatstoneschen Meßbrücken (I, II) zusammengeschaltet sind, wobei zwei Meßfühler auf der Radscheibeninnenseite und zwei Meßfühler auf der Radscheibenaußenseite zusammengehören.

4. Meßradsatz nach Anspruch 3, dadurch gekennzeichnet, daß die vier Meßfühler (R 1 bis R 4) einer Meßbrücke (I) jeweils um 90° auf dem Meßradius (r 11) versetzt angeordnet sind.

5. Meßradsatz nach einen der vorhergehenden Ansprüche dadurch gekennzeichnet, daß an sechs Meßquerschnitten auf der Radsatzwelle je acht Meßfühler zur Bestimmung des Radaufstandspunktes durch die an sich bekannte Meßmethode "Radsatzwellenverfahren" angeordnet sind.

**Claims**

1. Load-measuring wheelset for railway vehicles with sensors, in particular foil strain gauges, arranged on the wheel disks at various radii for the detection of forces occurring during running operations and characterized by the fact that eight sensors (R 1 to R 8) are arranged per radius such that four sensors (R 1, R 4, R 5, R 8) are located on the inside face of the wheel disk and four sensors (R 2, R 3, R 6, R 7) are located on the outside face of the wheel disk.

2. Load-measuring wheelset according to Claim 1 characterized by the fact that at least two measuring radii (r 11, r 12) are present per wheel disk.

3. Load-measuring wheelset according to Claim 1 or 2 characterized by the fact that the eight sensors (R 1 to R 8) of one measuring radius (r 11) are interconnected to two generally well-known Wheatstone measuring bridges (I, II) such that two sensors on the inside face of the wheel disk and two sensors on the outside face of the wheel disk form pairs.

4. Load-measuring wheelset according to Claim 3 characterized by the fact that the four sensors (R 1 to R 4) of one measuring bridge (I) are each arranged at an offset of 90° on the measuring radius (r 11).

5. Load-measuring wheelset according to one of the preceding Claims characterized by the fact that eight sensors each are arranged on six measuring cross-sections on the axle shaft in order to determine the wheel contact point by means of the generally well-known measuring method "Axle shaft procedure".

**Revendications**

1.  Essieu de mesure pour véhicules ferroviaires équipé, sur divers rayons des toiles de roue, de capteurs de mesures, en particulier des extensomètres, destinés à enregistrer les efforts apparaissant au cours de la marche et caractérisé par le fait que huit capteurs de mesure (R 1 à R 8) sont disposés sur chaque rayon, quatre capteurs de mesure (R 1, R 4, R 5, R 8) étant placés sur la face intérieure de la toile de roue et quatre capteurs de mesure (R 2, R 3, R 6, R 7) sur la face extérieure de la toile de roue.

2.  Essieu de mesure selon la revendication 1, caractérisé par le fait qu'il existe au moins deux rayons de mesure (r 11, r 12) par toile de roue

3.  Essieu de mesure selon la revendication 1 ou 2, caractérisé par le fait que les huit capteurs de mesure (R 1 à R 8) d'un rayon de mesure (r 11) sont reliés en deux ponts de mesure dits "ponts de Wheatstone" (I, II), deux capteurs de mesure appartenant à la face intérieure de la toile de roue et deux capteurs de mesure à la face extérieure de la toile de roue.

4.  Essieu de mesure selon la revendication 3, caractérisé par le fait que les quatre capteurs de mesure (R 1 à R 4) d'un pont de mesure (I) sont disposés sur le rayon de mesure (r 11) avec un décalage de respectivement 90°.

5.  Essieu de mesure selon l'une des revendications ci-avant, caractérisé par le fait que, dans six sections de mesure sur l'essieu-axe, sont disposés respectivement huit capteurs de mesure destinés à déterminer le point de contact de la roue selon la procédure connue sous le nom de "procédure de l'essieu-axe".

Fig. 1

Fig. 2

Fig. 3

Fig. 4